# EUROPÄISCHE PATENTSCHRIFT

(11) **EP 2 766 195 B1**
(45) Veröffentlichungstag und Bekanntmachung des Hinweises auf die Patenterteilung: **14.06.2017**
(21) Anmeldenummer: 12774929.9
(22) Anmeldetag: 27.09.2012
(51) Int. Cl.: B60B 21/02, B60B 21/12

(54) **FELGE, FAHRZEUGRAD SOWIE FAHRZEUG MIT EINER DERARTIGEN FELGE**
RIM, VEHICLE WHEEL, AND VEHICLE WITH SUCH A RIM
JANTE, ROUE DE VÉHICULE, AINSI QUE VÉHICULE ÉQUIPÉ DE LADITE JANTE

(30) Priorität: 10.10.2011 DE 102011115383; 20.04.2012 DE 102012007990
(43) Veröffentlichungstag der Anmeldung: 20.08.2014
(73) Patentinhaber: Volkswagen Aktiengesellschaft, 38440 Wolfsburg (DE)
(72) Erfinder: RATHJE, Volker, 38518 Gifhorn (DE); HALLBAUER, Alina, 38442 Wolfsburg (DE); ERTELT, Franz-Josef, 38448 Wolfsburg (DE); BRAUSE, Martin, 38300 Wolfenbüttel (DE); GOEBEL, Mark-Ulf, 38667 Bad Harzburg (DE); WODTKE, Hans-Walter, 53773 Hennef (DE)
(86) Internationale Anmeldenummer: PCT/EP2012/004047
(87) Internationale Veröffentlichungsnummer: WO 2013/053436

(56) Entgegenhaltungen:
- EP-A1- 1 990 213
- EP-A1- 2 052 876
- US-A- 4 896 921
- US-A1- 2011 057 505

## Beschreibung

Die Erfindung betrifft eine Felge, auf welche ein Fahrzeugreifen aufgezogen oder aufziehbar ist nach dem Oberbegriff des Patentanspruchs 1 der Erfindung. Die Erfindung betrifft ferner ein Fahrzeugrad oder ein Fahrzeug mit einer derartigen Felge gemäß Patentanspruch 15 der Erfindung.

Seit geraumer Zeit ist es bekannt, mittels innerhalb des Reifentorus eines Fahrzeugrades angeordneter Einrichtungen zur Absorption von Schall, beispielsweise mittels Resonanzabsorber die Schallemission des Fahrzeugrades zu minimieren. Als Resonanzabsorber werden dabei insbesondere Helmholtz-Resonatoren vorgeschlagen, die im Wesentlichen aus einem von einem Behältnis umschlossenen Luftvolumen mit einer engen Öffnung nach außen bestehen. Durch die Elastizität des Luftvolumens im Inneren des Behältnisses in Kombination mit der trägen Masse der in besagter engen Öffnung befindlichen Luft entsteht ein mechanisches Feder-Masse-System. Die auftreffende Schallenergie wird in kinetische Energie der besagten Masse umgewandelt. Als Feder fungiert das im Behältnis eingeschlossene Luftvolumen.

So ist aus der JP 2004 090669 ein Helmholtz-Resonator an einem Fahrzeugrad bekannt, bei dem das Luftvolumen durch das Felgenbett, durch zwei einstückig mit dem Felgenbett ausgebildete und in axialer Richtung der Felge gesehen zueinander beabstandet angeordnete, radial ausgerichtete und umlaufende Wand- bzw. Stegelemente sowie durch ein Deckelelement und in Umfangsrichtung das Luftvolumen begrenzende Querwände gebildet ist. Das Deckelelement ist mittels eines elastomeren Klebstoffes auf das vom Felgenbett und die Wand- bzw. Stegelemente gebildete, umlaufende U-Profil geklebt und verschließt dieses somit. Gleichfalls mittels eines elastomerem Klebstoffes sind die Querwände vorab in das U-Profil geklebt, die ihrerseits das umlaufende Profil in mehrere Luftvolumen aufteilen. Die erforderlichen engen Öffnungen zur Ausbildung der schwingenden Masse für besagte Helmholtz-Resonatoren sind vorliegend im Deckelelement eingebracht. Aufgrund der Vielzahl separater zu verbauender Bauteile und des Verklebens derselben geht diese Lösung mit einem erheblichen Montageaufwand einher. Um diesem Umstand zu begegnen, ist es aus einer Mehrzahl Druckschriften bekannt, vorgefertigte Helmholtz-Resonatoren bereitzustellen und dieselben insbesondere formschlüssig im Bereich des Felgenbettes an der Felge zu befestigen. Im Wesentlichen werden beispielsweise durch Blasformen aus Kunststoff hergestellte Helmholtz-Resonatoren bereitgestellt, die ihrerseits Verrastungsmittel aufweisen, vermittels derer die Helmholtz-Resonatoren in vorbereitete Rastaufnahmen der umlaufenden Wand- bzw. Stegelemente verrasten. Sicherlich ist mit dieser Maßnahme der Montageaufwand gemindert. Ungeachtet dessen ist eine Erhöhung des Gewichts des Helmholtz-Resonators zu verzeichnen, da derselbe nunmehr neben einem Deckelelement und zwei Stirnflächenelementen zusätzlich ein Bodenelement sowie besagte Verrastungsmittel aufweist (z. B. EP 1 990 213 A1, EP 2 052 876 A1, US 2010/0090520 A1, US 2010/0096909 A1, US 2011/0057505 A1).

Eine Felge nach dem Oberbegriff des Anspruch 1 wird in der EP 2 052 876 A1 offenbart. Die Felge verfügt über einen Helmholtz-Resonator zur Absorption von Schall. Das Luftvolumen des Resonators ist am Felgenbett angeordnet. Es wird gebildet durch Wandelemente, ein Bodenelement und ein Deckelelement, die luftdicht miteinander verbunden sind.

Vor diesem Hintergrund ist es Aufgabe der Erfindung, eine im Hinblick auf den Stand der Technik weiter verbesserte Felge mit zumindest einer Einrichtung zur Absorption von Schall in Form eines Helmholtz-Resonators zu schaffen, deren Material-, Montage- und demgemäß Kostenaufwand zur Ausbildung des zumindest einen Helmholtz-Resonators minimiert ist.

Ausgehend von einer Felge, auf welche ein Fahrzeugreifen aufgezogen oder aufziehbar ist, wobei die Felge ein Felgenbett aufweist, auf der zumindest eine Einrichtung zur Absorption von Schall nach Art eines Helmholtz-Resonators mit einem wenigstens teilringförmigen Luftvolumen und zumindest einer insbesondere engen Öffnung zum Reifeninnenraum angeordnet ist, und wobei das besagte Luftvolumen des Helmholtz-Resonators durch das Felgenbett, durch in axialer Richtung der Felge gesehen am Felgenbett zueinander beabstandet angeordnete, radial ausgerichtete und zumindest teilweise umlaufende Wand- und/oder Stegelemente sowie durch ein Deckelelement oder durch ein Deckelelement und in Umfangsrichtung das Luftvolumen begrenzende Querwände gebildet ist, wird die gestellte Aufgabe dadurch gelöst, dass das Deckelelement mit den Wand- und/oder Stegelementen formschlüssig oder form- und kraftschlüssig sowie luftdicht verbunden ist.

Durch diese Maßnahme sind bei gemindertem Gewicht vorteilhaft sowohl die Montagekosten als auch der Materialaufwand zur Ausbildung des zumindest einen Helmholtz-Resonators minimiert, da sich die Montage auf besagte form- oder form- und kraftschlüssige Fügeverbindung lediglich eines Deckelelementes mit besagten Wand- und/oder Stegelementen beschränkt.

Die Unteransprüche beschreiben bevorzugte Weiterbildungen oder Ausgestaltungen der Erfindung.

Das Deckelelement kann zur radial und axial festen Verbindung desselben mit der Felge radial abgestellte und in Umfangsrichtung der Felge verlaufende Seitenstege mit axial nach außen weisenden Formschlussmitteln in Form von Verrastungselementen auf, die ihrerseits durch radiales Aufsetzen des Deckelelements auf eine durch die Wand- und/oder Stegelemente sowie das Felgenbett gebildete Umfangsnut mit in den Wand- und/oder Stegelementen vorgesehenen nutenförmigen Aussparungen verrasten. Dies hat den Vorteil einer einfachen und kostengünstig zu bewerkstelligenden Montage des Deckelelements an der Felge.

Gemäß der Erfindung ist vorgesehen, dass das Deckelelement zum einen zur radial festen Verbindung desselben mit der Felge radial abgestellte und in Umfangsrichtung der Felge verlaufende Seitenstege aufweist, deren freies Ende jeweils durch einen axial abgestellten Flansch gebildet ist, wobei besagte Flansche gleichgerichtet sind und durch axiales Verschieben des Deckelelements relativ zur Felge in je eine in den Wand- und/oder Stegelementen vorgesehene nutenförmige Aussparung eindringen, und zum anderen zur axial festen Verbindung desselben mit der Felge eine Mehrzahl in Umfangsrichtung der Felge gesehen hintereinander angeordnete sowie entgegen der Verschieberichtung weisende Schnapplaschen aufweist, deren freies Ende im montierten Zustand des Deckelelements in eine korrespondierende Aufnahmenut der Felge eingeschnappt ist. Durch diese Maßnahme ist ein besonders wirkungsvoller Form- oder Form- und Kraftschluss zwischen dem Deckelelement und der Felge zu verzeichnen. Überdies ist dieser Fügeverbund bei Bedarf äußerst einfach wieder zu lösen. In Weiterbildung können die Schnapplaschen einstückig mit dem Deckelelement ausgebildet sein, woraus insbesondere Einsparungen an Material- und Montagekosten resultieren. Um die Fixierung der Schnapplaschen schnell und kostengünstig zu bewerkstelligen, ist die zu den Schnapplaschen korrespondierende Aufnahmenut durch wenigstens ein vom Felgenbett ausgehend nach radial außen abgestelltes und zumindest teilweise in Umfangsrichtung der Felge umlaufendes Wand- oder Stegelement gebildet. Bevorzugt ist besagtes Stegelement integral mit der Felge ausgebildet. Um den lösbaren Fügeverbund auch bei hohen Belastungen, insbesondere hohen Radialkräften zu gewährleisten, ist vorgesehen, dass der auf der den Schnapplaschen axial gegenüberliegenden Seite des Deckelelements angeordnete, axial abgestellte Flansch in einen nach radial außen abgestellten Endflansch übergeht. Vorteilhaft ist durch diese Maßnahme bei hohen Zentrifugalkräften und nicht zu vermeidender Verformung des Deckelelements nach radial außen sozusagen ein "Verkrallen" besagten Endflansches in der zugeordneten nutenförmigen Aussparung zu verzeichnen.

Um eine hochwirksame luftdichte Verbindung zwischen dem Deckelelement und den angrenzenden Kontaktabschnitten der Wand- und/oder Stegelemente und/oder dem Felgenbett zu bewirken, ist gemäß einer vorteilhaften Ausgestaltung der Erfindung zumindest ein Dichtelement vorgesehen. Um die Bauteileanzahl des Helmholtz-Resonators zu mindern, ist in Weiterbildung der Erfindung vorgesehen, dass das Deckelelement einstückig mit demselben ausgebildete Querwände zur Begrenzung des Luftvolumens aufweist, die sich ihrerseits mit ihrem freien Ende am Felgenbett abstützen. Allein durch die Montage des Deckelelementes sind dadurch die das jeweilige Luftvolumen in Umfangsrichtung gesehen stirnseitig begrenzenden Querwände realisiert. In Fortbildung der Erfindung ist des Weiteren vorgesehen, dass sich das zumindest eine Dichtelement bis in den Kontaktbereich der Querwände des Deckelelementes mit dem Felgenbett erstreckt, wodurch eine besonders effektive Abdichtung gewährleistet ist. Eine zweckmäßige Abwandlung der Erfindung wird dadurch erreicht, dass die vom Deckelelement ausgebildeten Querwände radial-schräg zum Felgenbett hin verlaufen und sich an diesem abstützen. Durch diese Maßnahme kann die Dichtwirkung zwischen den Querwänden und dem Felgenbett noch weiter verbessert werden, indem sich infolge der erfindungsgemäßen form- oder form- und kraftschlüssigen Fügeverbindung die Querwände sich unter Vorspannung am Felgenbett anschmiegen. Gemäß weiterer zweckmäßiger Abwandlungen der Erfindung ist vorgesehen, dass das zumindest eine Dichtelement als separates Anbauteil oder einstückig mit dem Deckelelement ausgebildet ist. Wird ein separates Dichtelement favorisiert, ist dasselbe z.B. im Reparaturfall einfach und kostengünstig austauschbar. Wird demgegenüber ein einstückig mit dem Deckelelement ausgebildetes Dichtelement, beispielsweise ein an dasselbe nach einem Kunststoff-Spritzgießverfahren angespritztes Dichtelement vorgesehen, sind vorteilhaft die Bauteileanzahl und die Montagezeit gemindert. Gemäß einer bevorzugten Ausgestaltung ist das Deckelelement topf- oder schalenförmig ausgebildet. Dies hat den Vorteil, dass allein schon durch diese Ausgestaltung des Deckelelementes eine hohe Formstabilität desselben erzielt wird, welche wiederum vorteilhaft der Einhaltung der erforderliche Volumenkonstanz des Luftvolumens des Helmholtz-Resonators dient. Um die besagte Formstabilität des Deckelelementes noch weiter zu erhöhen, weist das Deckelelement gemäß einer weiteren Ausgestaltungsvariante ein oder mehrere Mittel zur Versteifung, wie Bombierungen, Versteifungsstege, Versteifungssicken und/oder dgl. mehr auf. Insoweit ist es zweckmäßig, das Deckelelement aus Metall- und/oder Kunststoff und/oder einem Verbundwerkstoff auszubilden. Diese Werkstoffe ermöglichen aufgrund ihrer Materialeigenschaften bzw. ihrer einstellbaren Materialeigenschaften eine einfache und kostengünstige Herstellung und Montage eines derartigen formstabilen Deckelelementes.

Die Erfindung betrifft auch ein Fahrzeugrad oder ein Fahrzeug mit einer Felge der vorstehend beschriebenen Art.

Nachstehend wird die Erfindung anhand des in den Zeichnungen schematisch dargestellten Ausführungsbeispiel 5 näher erläutert. Sie ist jedoch nicht auf dieses Ausführungsbeispiel beschränkt, sondern erfasst alle durch die Patentansprüche definierten Ausgestaltungen. Es zeigen:
- Fig. 1: ein Fahrzeug in einer Seitenansicht, dessen Fahrzeugräder eine erfindungsgemäß ausgebildete Felge aufweisen,
- Fig. 2: ein Fahrzeugrad mit einer Felge in einer Schnittansicht (Ausführungsbeispiel 1),
- Fig. 3: die Einzelheit "Z" nach Fig. 2,
- Fig. 4a-4e: ein Deckelelement eines Helmholtz-Resonators der Felge nach Fig. 2 als Einzelteil in einer Drauf-, Seiten-, Stirnseiten- und Unteransicht,
- Fig. 5a-5c: äußerst schematisch das Fahrzeugrad in einer Schnittansicht mit einem Deckelelement in weiteren möglichen Ausgestaltungsvarianten (Ausführungsbeispiele 2-4),
- Fig. 6: das Deckelelement gemäß Fig. 5a in einer detaillierteren Darstellung,
- Fig. 7a-7b: die perspektivische Draufsicht auf das an der Felge verbaute Deckelelement gemäß Fig. 5a mit einer engen Öffnung zum Reifeninnenraum in zwei zweckmäßigen Anordnungsvarianten derselben,
- Fig. 8: eine erfindungsgemäß ausgebildete Felge in einer Schnittansicht gemäß einem fünften Ausführungsbeispiel,
- Fig. 9: ein erfindungswesentliches Deckelelement eines Helmholtz-Resonators der Felge nach Fig. 8 samt eines Dichtelements in einer perspektivischen Explosionsdarstellung,
- Fig. 10: eine Schnittdarstellung der Felge samt Deckelelement und Dichtelement entlang der Schnittlinie "I-I" nach Fig. 8,
- Fig. 11: die Einzelheit "Y" nach Fig. 8 ohne Deckelelement, und
- Fig. 12a-b: das Deckelelement in Einbausituation in einem Betriebszustand, bei dem das Fahrzeugrad steht und in einem Betriebszustand, bei dem das Fahrzeugrad mit hoher Geschwindigkeit umläuft.

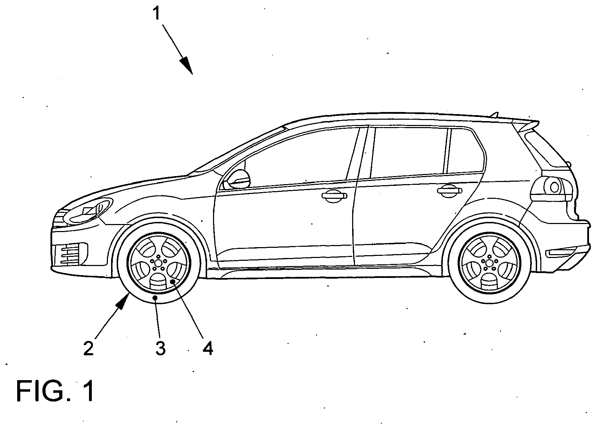

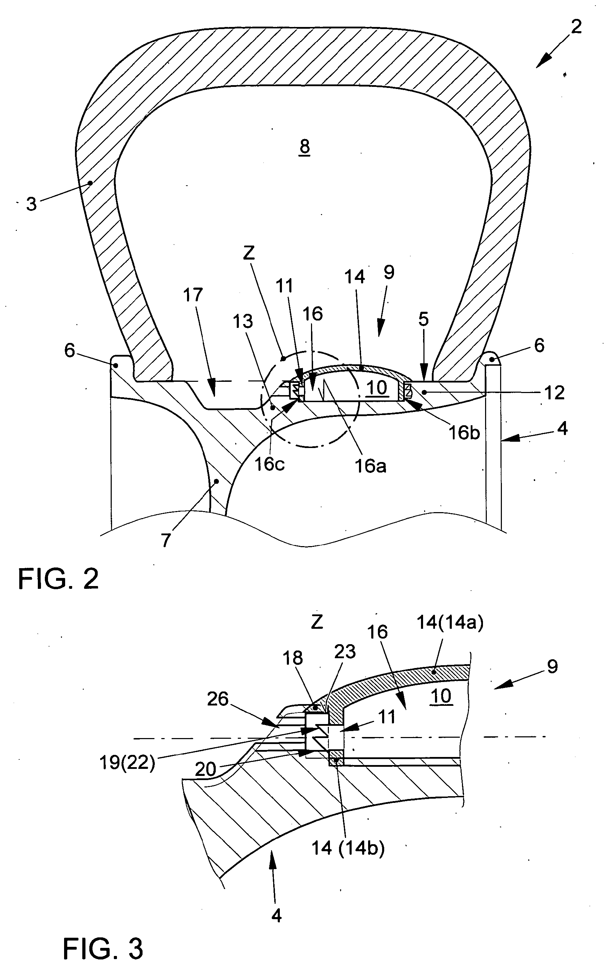

Fig. 1 zeigt zunächst ein Fahrzeug 1 mit Fahrzeugrädern 2, deren Reifen 3 auf jeweils eine Felge 4 aufgezogen sind. Die Felge 4 ist überwiegend aus Metall, beispielsweise Leichtmetallguss, aus einem Kunststoff, insbesondere faserverstärktem Kunststoff, oder auch aus einer Kombination der besagten Werkstoffe gefertigt. Besagte Felge 4 weist gemäß den Fig. 2 und 3 ein Felgenbett 5, Felgenhörner 6 und eine Radscheibe 7 auf. Um vom jeweiligen Fahrzeugrad 2 respektive vom System Reifen 3 / Felge 4 ausgehende störende Geräusche, die ihrerseits insbesondere aus der Torusresonanz im zwischen Reifen 3 und Felge 4 gebildeten Reifeninnenraum 8 resultieren, zu minimieren, ist auf dem Felgenbett 5 zumindest eine Einrichtung zur Absorption von Schall nach Art eines Helmholtz-Resonators 9 mit einem in Umfangsrichtung des Felgenbettes 5 gesehen wenigstens teilringförmigen Luftvolumen 10 und zumindest einer insbesondere engen Öffnung 11 zum Reifeninnenraum 8 angeordnet.

### Ausführungsbeispiel 1

Gemäß dem in den Fig. 2 bis 4e gezeigten ersten Ausführungsbeispiel des Helmholtz-Resonators 9 umschließt dieser lediglich teilweise das Felgenbett 5, da hier zwei oder mehr gleichmäßig über den Umfang des Felgenbettes 5 verteilt angeordnete Helmholtz-Resonatoren 9 favorisiert werden. Vorliegend weist ein derartiger Helmholtz-Resonator 9 ein einstückig mit dem Felgenbett 5 ausgebildetes Wandelement 12 und dazu in axialer Richtung der Felge 4 gesehen beabstandet ein einstückig mit dem Felgenbett 5 ausgebildetes Stegelement 13 auf. Selbstverständlich ist es auch möglich, demgegenüber zwei zueinander beabstandet angeordnete Wandelemente 12 oder Stegelemente 13 vorzusehen (nicht zeichnerisch dargestellt). Das Wand- und Stegelement 12, 13 eines jeden Helmholtz-Resonators 9 sind radial ausgerichtet und zumindest teilweise umlaufend ausgebildet. Des Weiteren sind zur Ausbildung eines jeden Helmholtz-Resonators 9 ein Deckelelement 14 und in Umfangsrichtung das Luftvolumen 10 begrenzende Querwände 15 vorgesehen.

Wird dagegen lediglich ein einziger, das Felgenbett 5 in Umfangsrichtung desselben gesehen voll umschließender Helmholtz-Resonator 9 favorisiert, sind verständlicherweise besagte Querwände 15 entbehrlich (nicht zeichnerisch dargestellt).

Das besagte Wandelement 12 geht nach axial außen in ein Felgenhorn 6 über. Demgegenüber separiert das Stegelement 13 zwei ring- oder teilringförmige Ausnehmungen 16, 17 im Felgenbett 5 voneinander. Die zwischen dem Wandelement 12 und dem Stegelement 13 angeordnete Ausnehmung 16 weist einen Ausnehmungsgrund 16a und zwei radial ausgerichtete Seitenwände 16b, 16c auf, die ihrerseits vom Wand- bzw. Stegelement 12, 13 gebildet sind (Fig. 2).

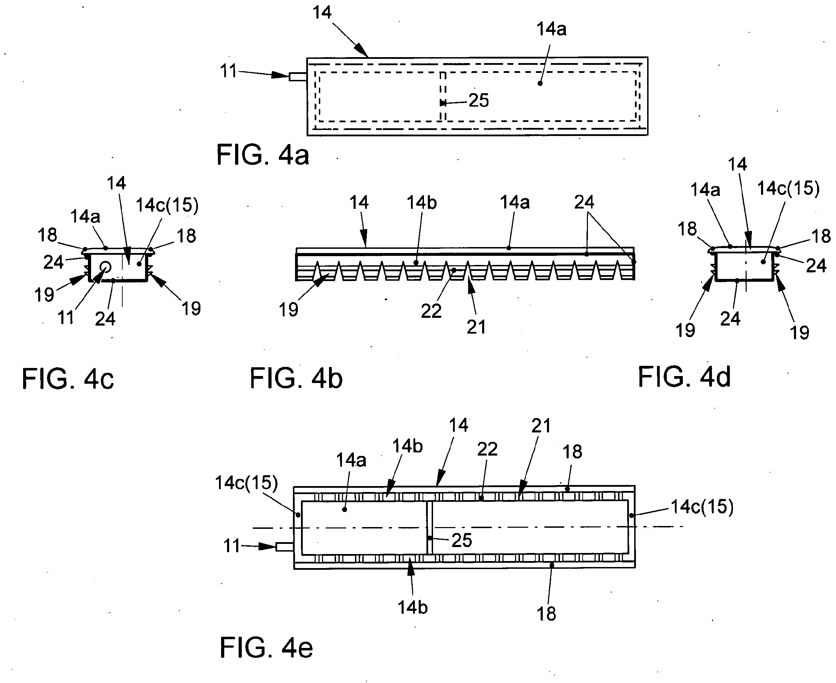

Das Deckelelement 14 ist seinerseits topfförmig ausgebildet und verfügt über eine Deckfläche 14a, über zwei vorzugweise orthogonal zur Deckfläche 14a angeordnete Seitenstege 14b und über Querstege 14c bzw. im Hinblick auf den montierten Zustand des Deckelelementes 14 an der Felge 4 über radial abgestellte Seitenstege 14b und Querstege 14c. Die Seiten- und Querstege 14b, 14c sind ringförmig untereinander und stirnseitig mit der Deckfläche 14a derart verbunden, dass die Deckfläche 14a zumindest einen seitlichen Überstand 18 über die Seitenstege 14b ausbildet (Fig. 4a bis 4e). Des Weiteren sind im Bereich der Seitenstege 14b an denselben Formschlussmittel 19 vorgesehen. Die Formschlussmittel 19 sind vorliegend durch zwei übereinander angeordnete Reihen axial nach außen weisender hakenförmiger Verrastungselemente gebildet, die mit einer oder zwei nutenförmigen Aussparungen 20 im Wand- und Stegelement 12, 13 korrespondieren.

Wie insbesondere der Fig. 4b weiter zu entnehmen ist, sind die Seitenstege 14b sozusagen gezahnt mit konisch bzw. dreieckförmig ausgebildeten Zwischenräumen 21 zwischen den einzelnen Zähnen 22 ausgebildet. Hierdurch ist es ermöglicht, ein vorgefertigtes, langgestrecktes und an sich relativ biegesteifes topfförmiges Deckelelement 14 der vorbeschrieben Art während der Montage desselben an die Felge 4 komfortabel an die Umfangskontur der Felge 4 bzw. deren Wand- und Stegelemente 12, 13 durch Biegung des Deckelelementes 14 anzuschmiegen. Ein derartiges Deckelelement 14 kann dabei auch vorteilhaft für Felgen 4 mit im Radius unterschiedlichem Felgenbett 5 Verwendung finden.

Während der Montage des Deckelelementes 14 an die mit besagtem Wand- und Stegelement 12, 13 ausgeführte Felge 4 wird das topfförmige Deckelelement 14 radial auf die durch das Wand- und Stegelement 12, 13 sowie das Felgenbett 5 gebildete Umfangsnut aufgeclipst, indem die Formschlussmittel 19, vorliegend in Form besagter hakenförmiger Verrastungselemente, in die nutenförmigen Aussparungen 20 im Wand- und Stegelement 12, 13 formschlüssig respektive rastend eindringen. Gleichzeitig schmiegt sich der Überstand 18 der Deckfläche 14a radial an die korrespondierende Kontaktfläche 23 des Wand- und Stegelementes 12, 13 an. Die vorstehend erwähnten Querwände 15 des Helmholtz-Resonators 9 werden durch die Querstege 14c des Deckelelementes 14 gebildet, indem sich deren freie Enden radial auf dem Felgenbett 5 abstützen.

Das Deckelelement 14 ist gemäß einer bevorzugten Ausführungsform aus einem im Wesentlichen formstabilen, jedoch in Grenzen federelastischen Kunststoff nach beispielsweise einem Kunststoff-Spritzgießverfahren gefertigt. Ein derartiger Werkstoff ermöglicht durch eine gewisse axiale Vorspannung der Seitenstege 14b des Deckelelementes 14 gegen das Wand- und Stegelement 12, 13 besagte Verrastung. Dadurch ist zwischen dem Deckelelement 14 und dem Wand- und Stegelement 12, 13 sowohl Formschluss als auch Kraftschluss bewirkt.

Zur Ausbildung des Helmholtz-Resonators 9 sind Volumenkonstanz des Luftvolumens 10 sowie eine luftdichte Verbindung des Deckelelementes 14 mit der Felge 4 bzw. dessen Wand- und Stegelement 12, 13 und dessen Felgenbett 5 unabdingbar. Insoweit ist gemäß einer ersten bevorzugten Ausgestaltungsvariante das Deckelelement 14 auch unter radialer Vorspannung an der Felge 4 befestigt. Das bedeutet zum einen, dass sich der Überstand 18 der Deckfläche 14a unter Vorspannung radial an die korrespondierenden Kontaktfläche 23 des Wand- und Stegelementes 12, 13 anschmiegt. Zum anderen stützen sich die die Querwände 15 ausbildenden Querstege 14c des Deckelelementes 14 unter Vorspannung am Felgenbett 5 radial ab.

Gemäß einer weiteren Ausgestaltungsvariante ist dem Deckelelement 14 in Ergänzung der besagten radialen Vorspannung oder auch in Alleinstellung zumindest ein Dichtelement 24 zugeordnet (insbes. Fig. 4b bis 4d). Das zumindest eine Dichtelement 24 kann als separates Anbauteil ausgebildet sein und beispielsweise als ringförmiges Anbauteil aus einem elastomeren Kunststoff, Schaumstoff oder aus Gummi bestehen (nicht zeichnerisch dargestellt). Bevorzugt ist das Dichtelement 24 jedoch einstückig mit dem Deckelelement 14 ausgebildet. Wird demnach ein Deckelelement 14 aus Kunststoff favorisiert, kann das Dichtelement 24 beispielsweise als elastomere Kunststoff-Weichkomponente im Bereich der Kontaktflächen des Deckelelementes 14 mit der Felge 4 an eine Kunststoff-Hartkomponente des Deckelelementes 14 an sich angespritzt sein. Hierdurch ist eine kostengünstige Herstellung sowie einfache Montage des Deckelelementes 14 mit der Felge 4 ermöglicht. Selbstverständlich kann das Deckelelement 14 auch aus Metall, insbesondere einem umgeformten Metallblech, oder aus einem Verbundwerkstoff, z. B. einem faserverstärkten Kunststoff, bestehen und eine oder mehrere montierte oder angespritzte Dichtelemente 24 aufweisen. Des Weiteren kann das Deckelelement 14, insbesondere dessen Deckfläche 14a zur Gewährleistung besagter Volumenkonstanz auch Mittel 25 zur Versteifung, wie beispielweise Stegelemente (vgl. insbes. Fig. 4a, 4e), Bombierungen (Fig. 2 und 3) und/oder dgl. mehr aufweisen.

Die erforderliche enge Öffnung 11 des Helmholtz-Resonators 9 zum Reifeninnenraum 8 ist gemäß Fig. 3 in dem zum Stegelement 13 der Felge 4 weisenden Seitensteg 14b des Deckelelementes 14 angeordnet und korrespondiert mit einer Durchgangsöffnung 26 im besagten Stegelement 14. Die Durchgangsöffnung 26 endet dabei in der ring- oder teilringförmigen Ausnehmung 17 des Felgenbettes 5. Die Erfindung beschränkt sich jedoch nicht auf diese Anordnung der engen Öffnung 11 des Helmholtz-Resonators 9, sondern erfasst auch eine Öffnung 11 in einem Quersteg 14c des Deckelelementes 14, welche überdies wie vorliegend röhrchenförmig ausgebildet sein kann (vgl. Fig. 4a bis 4e). Ebenso kann besagte Öffnung 11 auch in der Deckfläche 14a des Deckelelementes 14 angeordnet sein (bzgl. dieses Ausführungsbeispiels nicht zeichnerisch dargestellt).

### Ausführungsbeispiele 2 bis 4

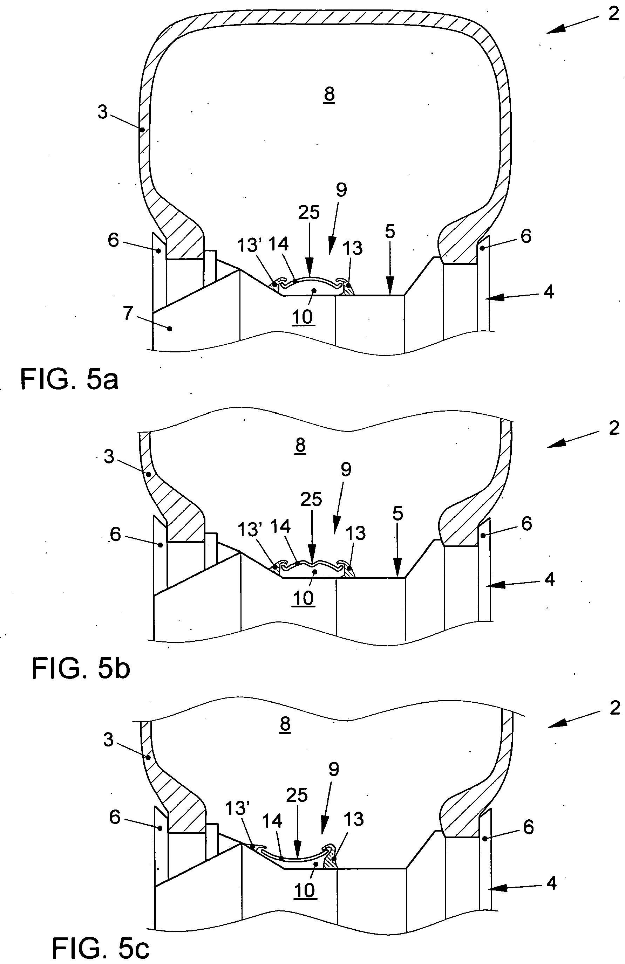

In den Fig. 5a bis 7b sind weitere Ausführungsbeispiele des an der Felge 4 ausgebildeten Helmholtz-Resonators 9 gezeigt, wobei funktionsgleiche Teile mit gleichen Bezugszeichen wie zu den vorbeschriebenen Ausführungsbeispielen bezeichnet sind.

Die Ausführungsbeispiele gemäß den Fig. 5a bis 7b unterscheiden sich im Wesentlichen von den vorbeschriebenen dadurch, dass das Deckelelement 14 nunmehr schalenförmig ausgebildet ist. Lediglich beispielgebend stützt sich das nunmehr schalenförmige Deckelelement 14 an zwei axial zueinander beabstandet angeordneten Stegelementen 13, 13' ab. Die Stegelemente 13, 13' sind ebenfalls einstückig mit der Felge 4 ausgebildet und ragen nach radial außen aus dem Felgenbett 5 hervor. Das schalenförmige Deckelelement 14 kann relativ dünnwandig aus einem Kunststoff, Metall, Verbundwerkstoff oder einer Kombination daraus bestehen.

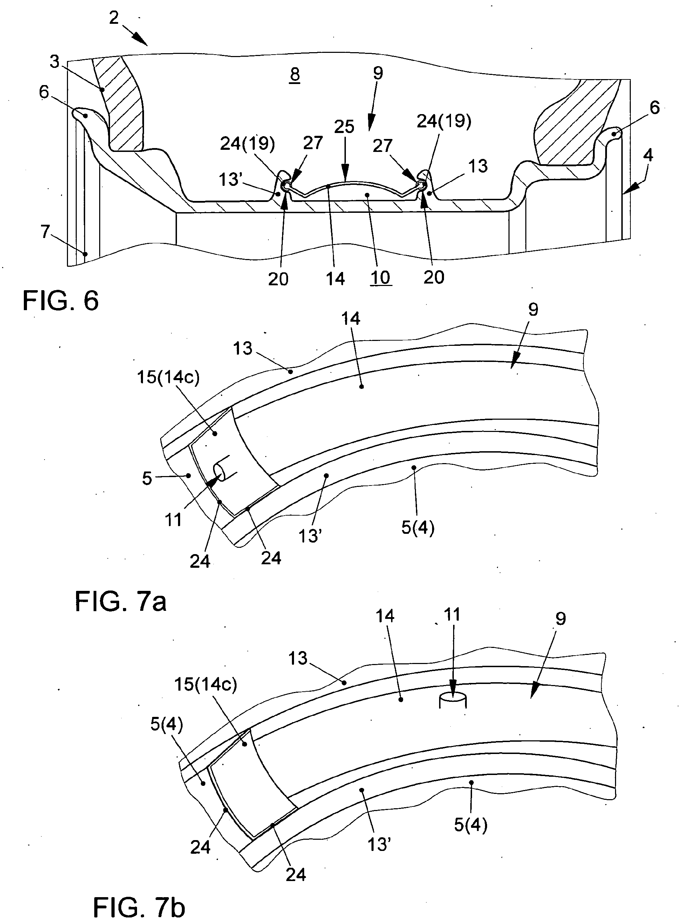

Wie bereits zum vorstehenden Ausführungsbeispiel ausgeführt, ist auch dieses Deckelelement 14 form- oder form- und kraftschlüssig mit den Stegelementen 13, 13' verbunden. Zur Gewährleistung der erforderlichen Steifigkeit des Deckelelementes 14 sowie der erforderlichen Volumenkonstanz weist dieses ebenfalls Mittel 25 zur Versteifung, wie beispielweise Bombierungen respektive konvex oder konkav ausgebildete Wölbungen (vgl. Fig. 5a, 5c, 6), Sicken (vgl. Fig. 5b), nicht näher dargestellte Stegelemente bzw. Materialanhäufungen und/oder andere an sich bekannte geeignete Mittel 25 zur Versteifung auf. Die Seitenkanten 27 des Deckelelementes 14 weisen überdies jeweils ein langgestrecktes Formschlussmittel 19 auf, welches mit einer entsprechend angepassten langgestreckten Aussparung 20 in den Stegelementen 13, 13' korrespondiert (vgl. insbes. Fig. 6).

Wie den Fig. 7a und 7b noch zu entnehmen ist, sind auch hier die Querwände 15 durch das nunmehr schalenförmige Deckelelement 14 respektive durch dessen freie Enden ausgebildet. Die besagten Querwände 15 verlaufen vorliegend radial-schräg zum Felgenbett 5 hin und stützen sich an diesem ab. Durch diese besondere Ausgestaltung des Deckelelementes 14 können während der Montage des Deckelelementes 14 die Querwände 15 besonders gut unter Vorspannung auf das Felgenbett 5 gepresst werden. Die beiden Querwände 15 eines jeden Deckelelementes 14 können dabei wie in den Fig. 7a bzw. 7b angedeutet in Umfangsrichtung gesehen voneinander weg oder auch aufeinander zu gerichtet (nicht zeichnerisch dargestellt) sein.

Im Bereich der Seitenkanten 27 des schalenförmigen Deckelelementes 14 ist bevorzugt ein Dichtelement 24, beispielsweise in Form einer angespritzten elastomeren Weichkomponente aus Kunststoff vorgesehen (Fig. 6). Für den Fachmann leicht nachvollziehbar, bietet es sich besonders an, das Dichtelement 24 am Rand des Deckelelementes 14 umlaufend auszubilden, wodurch eine einfache und wirkungsvolle Abdichtung aller Kontaktflächen des Deckelelementes 14 mit der Felge 4, also auch der Kontaktflächen mit dem Felgenbett 5 ermöglicht ist. Ungeachtet dessen sind demgegenüber auch hier separat hergestellte und anbaubare, beispielsweise in die Aussparung 20 einlegbare Dichtelemente 24 aus einem elastomeren Kunststoff, Schaumstoff oder Gummi denkbar und durch die Erfindung mit erfasst.

Was die für den Helmholtz-Resonator 9 erforderliche enge Öffnung 11 anbelangt, ist diese gemäß Fig. 7a in einer Querwand 15 und gemäß Fig. 7b in der Deckfläche 14a des Deckelelementes 14 vorgesehen. Auch hier ist lediglich beispielgebend die Öffnung 11 durch ein Röhrchen gebildet. Die enge Öffnung 11 kann im Hinblick auf alle vorbeschriebenen Ausführungsbeispiele wie vorliegend einstückig mit dem Deckelelement 14 ausgebildet oder auch durch ein separat hergestellten Anbauteil gebildet sein (nicht zeichnerisch dargestellt).

Sämtliche vorbeschriebenen Deckelelemente 14 stellen bezüglich des favorisierten Montageverfahrens auf eine radial gerichtet Montagebewegung zu den Wand- und/oder Stegelementen 12, 13 sowie nachfolgende form- oder form- und kraftschlüssige Verrastung des Deckelelementes 14 mit besagten Wand- und/oder Stegelementen 12, 13 ab. Demgegenüber besteht auch die Möglichkeit und ist somit ebenfalls durch die Erfindung mit erfasst, das Deckelelement 14 durch eine Vorschubbewegung in Umfangsrichtung des Felgenbettes 5 in vorbereitete Aussparungen 20 respektive Führungsnuten der Wand- und/oder Stegelemente 12, 13 sozusagen einzuschieben, wodurch der Form- oder Form- und Kraftschluss noch weiter verbessert werden kann, da herkömmlich zu gewährleistende Rastverformungen des Deckelelementes 14 nunmehr entbehrlich sind. Verständlicherweise sind in diesem Fall entsprechende Zuführungen zu den Aussparungen 20 respektive Führungsnuten der Wand- und/oder Stegelemente 12, 13 und/oder Baufreiheiten bezüglich in Umfangsrichtung gesehen etwaiger benachbarter Helmholtz-Resonatoren 9 zu schaffen (nicht zeichnerisch dargestellt).

### Ausführungsbeispiel 5

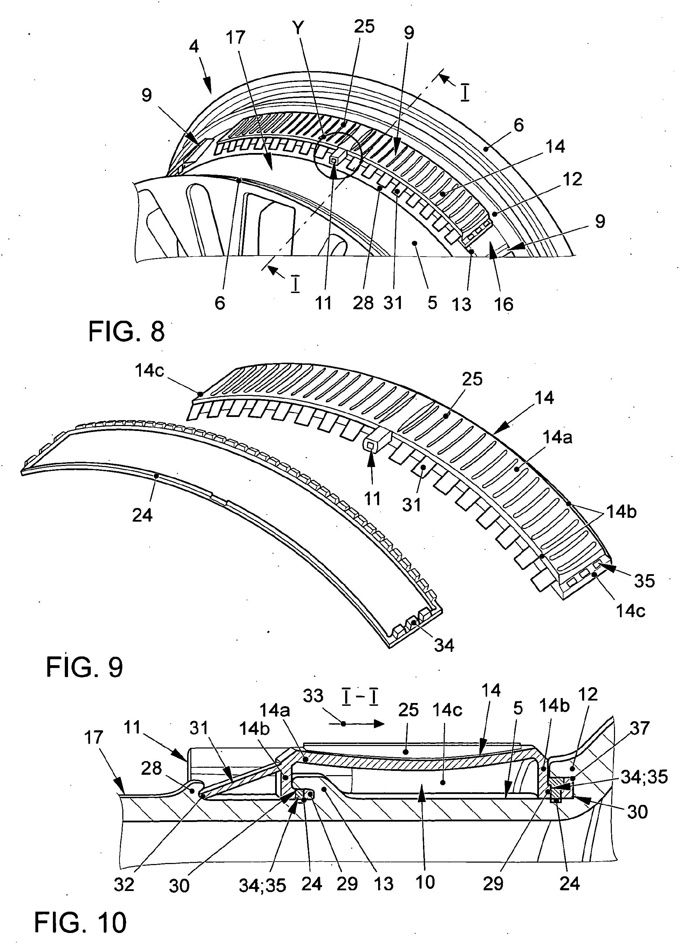

In den Fig. 8 bis 12b ist ein fünftes Ausführungsbeispiel des an der Felge 4 ausgebildeten Helmholtz-Resonators 9 gezeigt, wobei funktionsgleiche Teile mit gleichen Bezugszeichen wie zu den vorbeschriebenen Ausführungsbeispielen bezeichnet sind. Gemäß Fig. 8 sind hier eine Mehrzahl, bevorzugt vier gleichmäßig über den Umfang der Felge 4 verteilt angeordnete Helmholtz-Resonatoren 9 vorgesehen.

Gemäß den Fig. 9 und 10 weist ein jeder Helmholtz-Resonator 9 in Anlehnung an das erste Ausführungsbeispiel zunächst ein einstückig mit dem Felgenbett 5 ausgebildetes Wandelement 12 und dazu in axialer Richtung der Felge 4 gesehen beabstandet ein einstückig mit dem Felgenbett 5 ausgebildetes Stegelement 13 auf. Das Wand- und Stegelement 12, 13 eines jeden Helmholtz-Resonators 9 sind radial ausgerichtet und zumindest teilweise umlaufend ausgebildet. Des Weiteren sind zur Ausbildung eines jeden Helmholtz-Resonators 9 ein Deckelelement 14 und in Umfangsrichtung das Luftvolumen 10 begrenzende Querstege 14c vorgesehen.

Das besagte Wandelement 12 geht nach axial außen in ein Felgenhorn 6 über. Zwischen dem Wandelement 12 und dem Stegelement 13 ist eine teilringförmige Ausnehmung 16 im Felgenbett 5 ausgebildet. Im Unterschied zum ersten Ausführungsbeispiel gemäß Fig. 2 ist gemäß diesem Ausführungsbeispiel die sich an das Stegelement 13 axial anschließende Ausnehmung 17 zweigeteilt ausgebildet. Besagte Zweiteilung ist durch ein vom Felgenbett 5 ausgehend nach radial außen abgestelltes und zumindest teilweise in Umfangsrichtung der Felge 4 umlaufendes Stegelement 28 gebildet, auf welches weiter unter näher eingegangen wird. Bevorzugt ist das Stegelement 28 integral mit der Felge 4 ausgebildet.

Weiter weist ein jeder Helmholtz-Resonator 9 in Anlehnung an das erste Ausführungsbeispiel ein Deckelelement 14 auf, welches bevorzugt aus einem Kunststoff, insbesondere faserverstärktem Kunststoff, wie beispielsweise einem glasfaserverstärktem Polyamid (PA6-GF3) besteht. Das Deckelelement 14 ist topfförmig ausgebildet und verfügt über eine Deckfläche 14a, über zwei vorzugweise orthogonal zur Deckfläche 14a angeordnete Seitenstege 14b und über Querstege 14c bzw. im Hinblick auf den montierten Zustand des Deckelelementes 14 an der Felge 4 über radial abgestellte Seitenstege 14b und Querstege 14c. Die Deckfläche 14a des Deckelelements 14 ist konkav, d. h. zum Felgenbett 5 hin bzw. nach radial innen gewölbt ausgebildet. Auf der Deckfläche 14a sind Mittel 25 zur Versteifung, vorliegend eine Mehrzahl in Umfangsrichtung der Felge 4 gesehen hintereinander angeordnete und integral mit der Deckfläche 15a ausgebildete Versteifungsstege vorgesehen. Die besagten Versteifungsstege erstrecken sich dabei jeweils in einer in die Drehachse der Felge 4 gelegten Ebene.

Das freie Ende eines jeden Seitenstegs 14b ist durch einen axial abgestellten Flansch 29 gebildet. Die beiden Flansche 29 sind gleichgerichtet und weisen gemäß diesem Ausführungsbeispiel in Richtung des Wandelements 12. Den axial abgestellten Flanschen 29 ist im Wandelement 12 bzw. im Stegelement 13 jeweils eine nutenförmige Aussparung 30 zugeordnet, die nach unten vom Felgenbett 5 begrenzt ist.

Überdies weist das Deckelelement 14 eine Mehrzahl in Umfangsrichtung der Felge 4 gesehen hintereinander angeordnete Schnapplaschen 31 auf, die sich ausgehend vom dem Wandelement 12 entfernt angeordneten Seitensteg 14b des Deckelelements 14 axial vom besagten Wandelement 12 weg erstrecken. Das freie Ende einer jeden Schnapplasche 31 korrespondiert mit einer Aufnahmenut 32 in der Felge 4. Vorliegend ist besagte Aufnahmenut 32 durch das oben bereits erwähnte Stegelement 28 gebildet. Die Schnapplaschen 31 sind vorzugsweise integral respektive einstückig mit dem Deckelelement 14 ausgebildet.

Zur Montage des Deckelelements 14 an die Felge 4 wird das Deckelelement 14 vom Werker zunächst mit seinen Seitenstegen 14b auf dem Felgenbett 5 positioniert und zwar so, dass der eine Seitensteg 14b zwischen dem Wandelement 12 und dem Stegelement 13 und der andere Seitensteg 14b zwischen den Stegelementen 13 und 28 angeordnet ist, wobei die axial abgestellten Flansche 29 der Seitenstege 14b zur jeweils zugeordneten nutenförmige Aussparung 30 weisen. Im Anschluss daran wird das Deckelelement 14 gemäß dem Richtungspfeil 33 axial verschoben bis die besagten axial abgestellten Flansche 29 von den nutenförmigen Aussparungen 30 formschlüssig aufgenommen sind. Hierdurch ist das Deckelelement 14 an der Felge 4 radial fixiert. Die axiale Fixierung des Deckelelements 14 wird bewirkt, indem nachfolgend die freien Enden der Schnapplaschen 31 in die Aufnahmenut 32 des Stegelements 28 der Felge 4 einschnappen, welches manuell durch den Werker vollzogen wird. Im Ergebnis ist ein teilringförmiges Luftvolumen 10 geschaffen.

Zur Ausbildung des Helmholtz-Resonators 9 sind Volumenkonstanz des Luftvolumens 10 sowie eine luftdichte Verbindung des Deckelelementes 14 mit der Felge 4 bzw. dessen Wand- und Stegelement 12, 13 und/oder dessen Felgenbett 5 unabdingbar. Gemäß diesem Ausführungsbeispiel ist dem Deckelelement 14 ein als separates Anbauteil ausgebildetes Dichtelement 24 zugeordnet. Das Dichtelement 24 ist ringförmig ausgebildet und aus beispielsweise einem elastomeren Kunststoff, Schaumstoff oder aus Gummi gebildet (vgl. insbesondere Fig. 9 und 10). Die Befestigung des Dichtelements 24 am Deckelelement 14 ist durch einstückig mit dem Dichtelement 14 ausgebildete Befestigungsdome 34 bewirkt, die ihrerseits von zugeordneten Befestigungsöffnungen 35 der Seitenstege 14b und Querstege 14c des Deckelelements 14 formschlüssig aufgenommen sind. Alternativ kann das Dichtelement 24 auch stoffschlüssig durch insbesondere Klebung mit dem Deckelelement 14 verbunden oder auch einstückig mit dem Deckelelement 14 ausgebildet sein, beispielsweise als elastomere Kunststoff-Weichkomponente im Bereich der Kontaktflächen des Deckelelementes 14 mit der Felge 4 an eine Kunststoff-Hartkomponente des Deckelelementes 14 an sich angespritzt sein (nicht zeichnerisch dargestellt). Vermittels des Dichtelements 24 stützt sich das Deckelelement 14 respektive stützen sich deren Seitenstege 14b und Querstege 14c dichtend auf dem Felgenbett 5 ab.

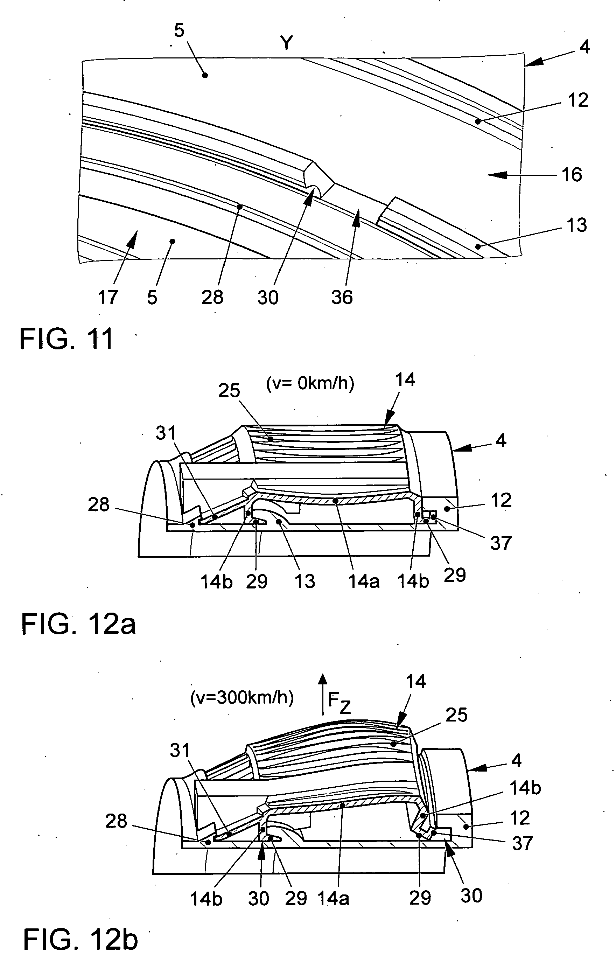

Die erforderliche enge Öffnung 11 des Helmholtz-Resonators 9 zum Reifeninnenraum 8 ist gemäß den Fig. 8 bis 10 röhrchenförmig ausgebildet, wobei das diesbezügliche Röhrchen ausgehend vom Stegelement 13 der Felge 4 sich axial in den Reifeninnenraum 8 erstreckt. Hierzu ist im Stegelement 13 eine zur Außenkontur des Röhrchens formkomplementäre Ausnehmung 36 vorgesehen, die vom besagten Röhrchen durchsetzt ist (Fig. 11).

Wie insbesondere der Fig. 10 weiter zu entnehmen ist, geht der auf der den Schnapplaschen 31 axial gegenüberliegenden Seite des Deckelelements 14 angeordnete, axial abgestellte Flansch 29 in einen nach radial außen abgestellten Endflansch 37 über, wodurch im Querschnitt gesehen sozusagen ein U-Profil gebildet ist. Wie bereits oben ausgeführt, ist hierdurch bei hohen Radialkräften und nicht zu vermeidender Verformung des Deckelelements 14 nach radial außen sozusagen ein "Verkrallen" besagten Endflansches 37 in der zugeordneten nutenförmigen Aussprung 30 zu verzeichnen.

Insoweit zeigt Fig. 12a das Deckelelement 14 in Einbausituation in einem Betriebszustand, bei dem das Fahrzeugrad 2 steht (Fahrtgeschwindigkeit "V" des Fahrzeugs 1 = 0 km/h). Es ist somit ein Ausgangs-Betriebszustand des Deckelelements 14 des Helmholtz-Resonators 9 zu verzeichnen, bei dem die mit den Versteifungsstegen respektive den Versteifungsmitteln 25 versehene Deckfläche 14a des Deckelelements 14 konkav, d. h. zum Felgenbett 5 hin bzw. nach radial innen gewölbt ist.

Gesetzt den Fall, das Fahrzeug 1 fährt beispielsweise mit einer maximalen Geschwindigkeit bzw. Grenzgeschwindigkeit "V_{Grenz}" von etwa 300 km/h, so ist aufgrund der hohen Umlaufgeschwindigkeit des Fahrzeugrades 2 sowie infolge der auf das Deckelelement 14 wirkenden hohen Zentrifugalkräfte "F_{z}" gemäß Fig. 12b ein elastisches nach außen Wölben der Deckfläche 14a des Deckelelements 14 zu verzeichnen. Hierbei wirken auch hohe Zugkräfte insbesondere auf den wandelementseitigen Seitensteg 14b des Deckelelements 14. Dadurch, dass das freie Ende des besagten Seitenstegs 14b im Querschnitt U-förmig ausgebildet ist, "verkrallt" sich der Endflansch 37 in der zugeordneten nutenförmigen Aussprung 30, wodurch wirkungsvoll ein ungewolltes Auflösen der Formschlussverbindung zwischen dem wandelementseitigen Seitensteg 14b und dem Wandelement 12 sowie eine Zerstörung des Helmholtz-Resonators 9 bei hohen Zentrifugalkräften "F_{z}" verhindert ist.

Das Ausführungsbeispiel 5 (Fig. 8 bis 10) stellt beispielgebend auf einen Helmholtz-Resonator 9 ab, dessen Deckelelement 14 derart auf der Felge 4 angeordnet ist, dass die Schnapplaschen 31 vom Wandelement 12 axial weggerichtet sind. Durch die Erfindung ist selbstverständlich auch eine hier nicht zeichnerisch dargestellte Variante mit erfasst, bei der die Schnapplaschen 31 zum Wandelement 12 hin gerichtet sind und dieselben in einer Aufnahmenut 32 des Wandelements 12 eingeschnappt sind. Ebenfalls mit erfasst ist ein derartiges Deckelelement 14, welches nicht unmittelbar an einem Wandelement 12 angeschlossen bzw. abgestützt ist, sondern in Anlehnung an die Ausführungsvarianten 2 bis 4 gemäß den Fig. 5a bis 5c ausschließlich an Stegelementen 13, 13', 28 angeschlossen bzw. abgestützt ist, d. h., das Wandelement 12 durch ein Stegelement 13'ersetzt ist (nicht zeichnerisch dargestellt).

**Bezugszeichenliste**

| | | | |
|---|---|---|---|
| 1 | Fahrzeug | 16c | Seitenwand |
| 2 | Fahrzeugrad | 17 | Ausnehmung |
| 3 | Reifen / Fahrzeugreifen | 18 | Überstand |
| 4 | Felge | 19 | Formschlussmittel |
| 5 | Felgenbett | 20 | Aussparung |
| 6 | Felgenhorn | 21 | Zwischenräume |
| 7 | Radscheibe | 22 | Zähne |
| 8 | Reifeninnenraum | 23 | Kontaktfläche |
| 9 | Helmholtz-Resonator | 24 | Dichtelement |
| 10 | Luftvolumen | 25 | Mittel zur Versteifung |
| 11 | Öffnung | 26 | Durchgangsöffnung |
| 12 | Wandelement | 27 | Seitenkanten |
| 13 | Stegelement | 28 | Stegelement |
| 13' | Stegelement | 29 | Flansche |
| 14 | Deckelelement | 30 | Aussparungen |
| 14a | Deckfläche | 31 | Schnapplaschen |
| 14b | Seitenstege | 32 | Aufnahmenut |
| 14c | Querstege | 33 | Richtungspfeil (Montagerichtung) |
| 15 | Querwände | 34 | Befestigungsdome |
| 16 | Ausnehmung | 35 | Befestigungsöffnungen |
| 16a | Ausnehmungsgrund | 36 | Ausnehmung |
| 16b | Seitenwand | 37 | Endflansch |

## Patentansprüche

1. Felge (4), auf welche ein Fahrzeugreifen (3) aufgezogen oder aufziehbar ist, wobei die Felge (4) ein Felgenbett (5) aufweist, auf der zumindest eine Einrichtung zur Absorption von Schall nach Art eines Helmholtz-Resonators (9) mit einem wenigstens teilringförmigen Luftvolumen (10) und zumindest einer Öffnung (11) zum Reifeninnenraum (8) angeordnet ist, und wobei das besagte Luftvolumen (10) des Helmholtz-Resonators (9) durch das Felgenbett (5), durch in axialer Richtung der Felge (4) gesehen am Felgenbett (5) zueinander beabstandet angeordnete, radial ausgerichtete und zumindest teilweise umlaufende Wand- und/oder Stegelemente (12, 13, 13') sowie durch ein Deckelelement (14) oder durch ein Deckelelement (14) und in Umfangsrichtung das Luftvolumen (10) begrenzende Querwände (15) gebildet ist, wobei das Deckelelement (14) mit den Wand- und/oder Stegelementen (12, 13, 13') formschlüssig oder form- und kraftschlüssig sowie luftdicht verbunden ist, **dadurch gekennzeichnet, dass** das Deckelelement (14) zum einen zur radial festen Verbindung desselben mit der Felge (4) radial abgestellte und in Umfangsrichtung der Felge (4) verlaufende Seitenstege (14b) aufweist, deren freies Ende jeweils durch einen axial abgestellten Flansch (29) gebildet ist, wobei besagte Flansche (29) gleichgerichtet sind und durch axiales Verschieben des Deckelelements (14) relativ zur Felge (4) in je eine in den Wand- und/oder Stegelementen (12, 13, 13') vorgesehene nutenförmige Aussparung (30) eindringen, und zum anderen zur axial festen Verbindung desselben mit der Felge (4) eine Mehrzahl in Umfangsrichtung der Felge (4) gesehen hintereinander angeordnete sowie entgegen der Verschieberichtung (33) weisende Schnapplaschen (31) aufweist, deren freies Ende im montierten Zustand des Deckelelements (14) in eine korrespondierende Aufnahmenut (32) der Felge (4) eingeschnappt ist.

2. Felge (4) nach Anspruch 1, **dadurch gekennzeichnet, dass** die Schnapplaschen (31) einstückig mit dem Deckelelement (14) ausgebildet sind.

3. Felge (4) nach einem der Ansprüche 1 oder 2, **dadurch gekennzeichnet, dass** die zu den Schnapplaschen (31) korrespondierende Aufnahmenut (32) durch wenigstens ein vom Felgenbett (5) ausgehend nach radial außen abgestelltes und zumindest teilweise in Umfangsrichtung der Felge (4) umlaufendes Wand- oder Stegelement (28) gebildet ist.

4. Felge (4) nach einem der Ansprüche 1 bis 3, **dadurch gekennzeichnet, dass** der auf der den Schnapplaschen (31) axial gegenüberliegenden Seite des Deckelelements (14) angeordnete, axial abgestellte Flansch (29) in einen nach radial außen abgestellten Endflansch (37) übergeht.

5. Felge (4) nach einem der Ansprüche 1 bis 4, **dadurch gekennzeichnet, dass** das Deckelelement (14) mittels zumindest eines Dichtelementes (24) luftdicht mit den Wand- und/oder Stegelementen (12, 13, 13') und/oder dem Felgenbett (5) verbunden ist.

6. Felge (4) nach einem der Ansprüche 1 bis 5, **dadurch gekennzeichnet, dass** das Deckelelement (14) einstückig mit demselben ausgebildete Querwände (15) zur Begrenzung des Luftvolumens (10) aufweist, die sich ihrerseits mit ihrem freien Ende am Felgenbett (5) abstützen.

7. Felge (4) nach Anspruch 5 und 6, **dadurch gekennzeichnet, dass** sich das zumindest eine Dichtelement (24) bis in den Kontaktbereich der Querwände (15) des Deckelelementes (14) mit dem Felgenbett (5) erstreckt.

8. Felge (4) nach Anspruch 6 oder 7, **dadurch gekennzeichnet, dass** die vom Deckelelement (14) ausgebildeten Querwände (15) radial-schräg zum Felgenbett (5) hin verlaufen und sich an diesem abstützen.

9. Felge (4) nach einem der Ansprüche 5 bis 8 **dadurch gekennzeichnet, dass** das zumindest eine Dichtelement (24) als separates Anbauteil oder einstückig mit dem Deckelelement (14) ausgebildet ist.

10. Felge (4) nach einem der Ansprüche 1 bis 9, **dadurch gekennzeichnet, dass** das Deckelelement (14) topf- oder schalenförmig ausgebildet ist.

11. Felge (4) nach einem der Ansprüche 1 bis 10, **dadurch gekennzeichnet, dass** das Deckelelement (14) Mittel (25) zur Versteifung desselben aufweist.

12. Felge (4) nach einem der Ansprüche 1 bis 11, **dadurch gekennzeichnet, dass** das Deckelelement (14) aus Metall- und/oder Kunststoff und/oder einem Verbundwerkstoff besteht.

13. Fahrzeugrad (2) oder Fahrzeug (1) mit einer Felge (4) nach einem der Ansprüche 1 bis 12.

## Claims

1. Rim (4), onto which a vehicle tyre (3) is pulled or can be pulled, the rim (4) having a rim well (5), on which at least one device for absorbing sound in the manner of a Helmholtz resonator (9) with an at least partially annular air volume (10) and at least one opening (11) to the tyre interior (8) is arranged, and said air volume (10) of the Helmholtz resonator (9) being formed by the rim well (5), by radially oriented and at least partially circumferential wall and/or web elements (12, 13, 13') which are arranged spaced apart from one another on the rim well (5) as viewed in the axial direction of the rim (4), and by a cover element (14) or by a cover element (14) and transverse walls (15) which delimit the air volume (10) in the circumferential direction, the cover element (14) being connected to the wall and/or web elements (12, 13, 13') in a positively locking manner or in a positively locking and non-positive manner, and in an airtight manner, **characterized in that** the cover element (14) firstly has, for the radially fixed connection of said cover element (14) to the rim (4), side webs (14b) which are positioned radially and run in the circumferential direction of the rim (4), the free end of which side webs (14b) is formed in each case by an axially positioned flange (29), said flanges (29) being oriented in the same direction and penetrating, by way of axial displacement of the cover element (14) relative to the rim (4), into in each case one groove-shaped cutout (30) which is provided in the wall and/or web elements (12, 13, 13'), and secondly has, for the axially fixed connection of said cover element (14) to the rim (4), a multiplicity of snap-in tabs (31) which are arranged one behind another as viewed in the circumferential direction of the rim (4) and point counter to the displacement direction (33), the free end of which snap-in tabs (31) is snapped into a corresponding receiving groove (32) of the rim (4) in the mounted state of the cover element (14).

2. Rim (4) according to Claim 1, **characterized in that** the snap-in tabs (31) are configured in one piece with the cover element (14).

3. Rim (4) according to either of Claims 1 and 2, **characterized in that** the receiving groove (32) which corresponds to the snap-in tabs (31) is formed by at least one wall or web element (28) which is positioned radially to the outside, starting from the rim well (5), and runs around at least partially in the circumferential direction of the rim (4).

4. Rim (4) according to one of Claims 1 to 3, **characterized in that** the axially positioned flange (29) which is arranged on that side of the cover element (14) which lies axially opposite the snap-in tabs (31) merges into an end flange (37) which is positioned radially to the outside.

5. Rim (4) according to one of Claims 1 to 4, **characterized in that** the cover element (14) is connected in an airtight manner to the wall and/or web elements (12, 13, 13') and/or the rim well (5) by means of at least one sealing element (24).

6. Rim (4) according to one of Claims 1 to 5, **characterized in that** the cover element (14) has transverse walls (15), which are configured in one piece with said cover element (14), for delimiting the air volume (10), which transverse walls (15) for their part are supported with their free end on the rim well (5).

7. Rim (4) according to Claims 5 and 6, **characterized in that** the at least one sealing element (24) extends as far as into the contact region of the transverse walls (15) of the cover element (14) with the rim well (5).

8. Rim (4) according to Claim 6 or 7, **characterized in that** the transverse walls (15) which are formed by the cover element (14) run in a radially oblique manner toward the rim well (5) and are supported on the latter.

9. Rim (4) according to one of Claims 5 to 8, **characterized in that** the at least one sealing element (24) is configured as a separate attachment component or in one piece with the cover element (14).

10. Rim (4) according to one of Claims 1 to 9, **characterized in that** the cover element (14) is of cup-like or shell-like configuration.

11. Rim (4) according to one of Claims 1 to 10, **characterized in that** the cover element (14) has means (25) for reinforcing said cover element (14).

12. Rim (4) according to one of Claims 1 to 11, **characterized in that** the cover element (14) is composed of metal and/or plastic and/or composite material.

13. Vehicle wheel (2) or a vehicle (1) having a rim (4) according to one of Claims 1 to 12

## Revendications

1. Jante (4) sur laquelle est tendu ou peut être tendu un pneu de véhicule automobile (3), la jante (4) présentant un fond de jante (5), sur lequel est disposé au moins un dispositif d'absorption du son du type résonateur de Helmholtz (9) avec un volume d'air au moins en forme d'anneau partiel (10) et au moins une ouverture (11) vers l'intérieur du pneu (8), et ledit volume d'air (10) du résonateur de Helmholtz (9) étant formé par le fond de jante (5), par des éléments de paroi et/ou de nervure (12, 13, 13') disposés à distance les uns des autres sur le fond de jante (5), vu dans la direction axiale de la jante (4), orientés radialement et au moins en partie périphériques, ainsi que par un élément de recouvrement (14) ou par un élément de recouvrement (14) et des parois transversales (15) limitant le volume d'air (10) dans la direction périphérique, l'élément de recouvrement (14) étant connecté aux éléments de paroi et/ou de nervure (12, 13, 13') par engagement par correspondance de formes ou par engagement par correspondance de formes et par force ainsi que de manière étanche à l'air, **caractérisée en ce que** l'élément de recouvrement (14) présente d'une part, en vue de sa connexion radialement fixe à la jante (4), des nervures latérales (14b) inclinées radialement et s'étendant dans la direction périphérique de la jante (4), dont l'extrémité libre est à chaque fois formée par une bride (29) inclinée axialement, lesdites brides (29) étant orientées dans le même sens et par déplacement axial de l'élément de recouvrement (14) par rapport à la jante (4), pénétrant chacune dans un évidement en forme de rainure (30) prévu dans les éléments de paroi et/ou de nervure (12, 13, 13'), et d'autre part, en vue de sa connexion axialement fixe à la jante (4), présente une pluralité de pattes d'encliquetage (31) disposées les unes derrière les autres, vu dans la direction périphérique de la jante (4), et orientées dans le sens opposé au sens de déplacement (33), dont l'extrémité libre est encliqueté dans l'état monté de l'élément de recouvrement (14) dans une rainure de réception correspondante (32) de la jante (4).

2. Jante (4) selon la revendication 1, **caractérisée en ce que** les pattes d'encliquetage (31) sont réalisées d'une seule pièce avec l'élément de recouvrement (14).

3. Jante (4) selon l'une quelconque des revendications 1 ou 2, **caractérisée en ce que** la rainure de réception (32) correspondant aux pattes d'encliquetage (31) est formée par au moins un élément de paroi ou de nervure (28) incliné radialement vers l'extérieur à partir du fond de jante (5) et s'étendant sur la périphérie au moins en partie dans la direction périphérique de la jante (4).

4. Jante (4) selon l'une quelconque des revendications 1 à 3, **caractérisée en ce que** la bride (29) inclinée axialement, disposée du côté de l'élément de recouvrement (14) opposé axialement aux pattes d'encliquetage (31), se prolonge par une bride d'extrémité (37) inclinée radialement vers l'extérieur.

5. Jante (4) selon l'une quelconque des revendications 1 à 4, **caractérisée en ce que** l'élément de recouvrement (14) est connecté au moyen d'au moins un élément d'étanchéité (24) de manière étanche à l'air aux éléments de paroi et/ou de nervure (12, 13, 13') et/ou au fond de jante (5).

6. Jante (4) selon l'une quelconque des revendications 1 à 5, **caractérisée en ce que** l'élément de recouvrement (14) présente des parois transversales (15) réalisées d'une seule pièce avec celui-ci pour limiter le volume d'air (10), lesquelles s'appuient pour leur part avec leur extrémité libre contre le fond de jante (5).

7. Jante (4) selon les revendications 5 et 6, **caractérisée en ce que** l'au moins un élément d'étanchéité (24) s'étend jusque dans la région de contact des parois transversales (15) de l'élément de recouvrement (14) avec le fond de jante (5).

8. Jante (4) selon la revendication 6 ou 7, **caractérisée en ce que** les parois transversales (15) réalisées par l'élément de recouvrement (14) s'étendent radialement et obliquement vers le fond de jante (5) et s'appuient contre celui-ci.

9. Jante (4) selon l'une quelconque des revendications 5 à 8, **caractérisée en ce que** l'au moins un élément d'étanchéité (24) est réalisé en tant que composant rapporté séparé ou est réalisé d'une seule pièce avec l'élément de recouvrement (14).

10. Jante (4) selon l'une quelconque des revendications 1 à 9, **caractérisée en ce que** l'élément de recouvrement (14) est réalisé en forme de pot ou en forme de coque.

11. Jante (4) selon l'une quelconque des revendications 1 à 10, **caractérisée en ce que** l'élément de recouvrement (14) présente des moyens (25) pour le rigidifier.

12. Jante (4) selon l'une quelconque des revendications 1 à 11, **caractérisée en ce que** l'élément de recouvrement (14) se compose de matériau métallique et/ou de plastique et/ou d'un matériau composite.

13. Roue de véhicule (2) ou véhicule (1) comprenant une jante (4) selon l'une quelconque des revendications 1 à 12.
